# EUROPEAN PATENT APPLICATION

(11) **EP 2 158 816 A1**
(43) Date of publication of application: **03.03.2010**
(21) Application number: 08162771.3
(22) Date of filing: 21.08.2008
(51) Int. Cl.: A23G 3/00, A23G 3/54, A23G 9/48, A23G 1/54, A23G 3/46, A23L 1/00

(54) **A composite dessert and process for preparing the same**

(71) Applicant: Nestec S.A., 1800 Vevey (CH)
(72) Inventor: Abraham, Denis, 14130 Coquainvilliers (FR); Bisson, Jean-Pierre, 14000 Caen (FR); Moreau, Jean, 14340 Manerbe (FR); Serre, Jean-Emmanuel, 14100, Le Mesnil-Eudes (FR)

(57) **Abstract**

The present invention relates to a composite food product **characterized in that** it comprises in combination:
(i) an outer shell made of a jellified composition,
(ii) at least one edible inclusion made of :
- a fermented or non-fermented milk-based product, and/or
- a puree, spread, pasta, filling composition, cream, foamed composition or mousse comprising chocolate, coffee, tea, cereals, fruit, vegetable, meat, fish, cereals, or a combination thereof.

Said invention further relates to a process for preparing such a composite food product.

## Description

### Field of the invention

The present invention concerns a composite dessert. More particularly, it concerns a composite dessert comprising at least one milk-based inclusion disposed into a jelly that is preferably translucent or transparent.

### Background of the invention

Composite food products, such as for instance composite desserts are known, where at least two different layers are superimposed in a pot. One layer can comprise for example a milk-based component, such as a dessert cream or a yogurt, while another one will be a jellified composition, based on fruit juice for instance. A third layer may include a mousse, or a whipped cream, like a "crème Chantilly" for instance. The occurrence of such desserts is more and more common in restaurants, driven by, among others, the trendy so-called "molecular cooking".

While appealing to the consumer, such kind of desserts are very well known, and therefore, there is a need for novelty and originality in this area.

In grocery shops, the current product offer based on jelly remains relatively simple and monotonous, driven by the low cost of jelly compositions. Apart efforts that are made in looking for novel colors and packaging, this mass product category lacks also novelty and originality in terms of product composition, flavours, and textures.

Some attempts have been made by manufacturers to bring a bit of differentiation into jelly cup products. Manufactured jellies containing fruit pieces inclusions or cut gel inclusion with a special shape are available mainly in Asian markets. However, such products require a pre-cutting of the jelly, which determines the shape of the inclusion. This process also limits the size of the inclusion that can be injected into products.

It is therefore a purpose of the invention to provide a dessert wherein the size and shape of the inclusion can be easily determined and adapted on an industrial scale manufacturing process.

Furthermore, in grocery shops, the majority of jellies proposed to mass consumers, are also known to be made of water, viscosifying agent and additives like flavour, sweetener, colouring agents, etc. This makes such products perceived as artificial. Moreover, their nutritional value is very poor.

It is therefore an additional purpose of the present invention to provide to the consumer a dessert that is more healthy, while still based on jelly products.

### Summary of the invention

The above mentioned needs and objectives are met with a process for manufacturing a composite food product, **characterized in that** it comprises following consecutive steps of:
(i) preparing a mix of at least one fruit and/or vegetable juice, or a water-based composition containing extracts of fish, meat, coffee, tea or other plants, or cereals, with at least one gelling ingredient such as a carrageenan or another equivalent jellifying agent such as gelatine, guar gum, agar, or a mixture thereof, heating said mix to at least 70°C for at least 3 min., and then cooling said mix to a temperature comprised between 12 and 50°C, preferably comprised between 30 and 45°C so as to thicken the said mix, then
(ii) preparing a fermented or non-fermented milk-based product, and/or a puree, spread, pasta, filling composition, cream, foamed composition or mousse comprising chocolate, coffee, tea, cereals, fruit, vegetable, meat, fish, cereals, or a combination thereof, wherein said milk composition is homogenised at a temperature superior to 60°C and a pressure of at least 220 bar for at least 15 sec., then said milk composition and/or said puree, spread, pasta, filling composition, cream, foamed composition or mousse is heated for at least 80°C, during at least 5 min., and then said milk composition and/or said puree is cooled to a temperature not higher than 5°C, preferably to a temperature equal to 4°C, then
(iii) dosing the juice or water-based composition mix into a container at a temperature that is inferior to its solidifying temperature but keeping it in movement during the whole dosing step so that it keeps its liquid state, said dosing being such that said mix represents at least 50%, preferably at least 60, more preferably at least 70% of the final product volume, and then
(iv) injecting at least once the milk composition and/or puree, spread, pasta, filling composition, cream, foamed composition or mousse into the thickened juice mix so as to create at least one inclusion of milk composition and/or puree, spread, pasta, filling composition, cream, foamed composition or mousse into the jellified juice, then
(v) optionally incubating the resulting composite food product at a temperature of at least 30°C, preferably a temperature of about 40°C for at least 3 min., so as to activate the coagulation of the inclusion, in the case where said inclusion(s) comprise(s) a fermented milk,
(vi) cooling said food product at a storage temperature, said temperature being preferably comprised between 1 and 9°C, more preferably between 5 and 7°C.

Advantageously, the inclusion is injected into the thickened juice mix at a temperature comprised between 4 and 50°C, preferably a temperature of about 42°C.

In a first possible embodiment of the invention, the dosing steps are achieved sequentially and directly in the container, by injecting firstly the juice or water-based mix, and then secondly needle-injecting the inclusions of milk composition and/or puree, spread, pasta, filling composition, cream, foamed composition or mousse, into the juice or water-based mix, using a needle that is movable relative to said juice or water-based mix.

In a second possible embodiment of the invention, the dosing steps are achieved sequentially and directly in the container, by injecting firstly the juice or water-based mix, and then secondly injecting the inclusions of milk composition and/or puree, spread, pasta, filling composition, cream, foamed composition or mousse, with a nozzle disposed above the surface of juice or water-based mix.

Another aspect of the present invention is directed to a composite food product obtained by a process according to the above description, **characterized in that** it comprises in combination:
(i) an outer shell made of a jellified composition,
(ii) at least one edible inclusion made of :
   - a fermented or non-fermented milk-based product, and/or
   - a puree, spread, pasta, filling composition, cream, foamed composition or mousse comprising chocolate, coffee, tea, cereals, fruit, vegetable, meat, fish, cereals, or a combination thereof.

In a highly preferred embodiment of the invention, the water activity Aw of the jellified composition is Aw ≥ 0.95, preferably Aw ≥ 1.0.

Advantageously, the jellified composition comprises at least one fruit and/or vegetable juice, or a water-based composition containing extracts of fish, meat, coffee, tea or other plants, or cereals, said jellified composition further comprising at least one gelling ingredient such as a carrageenan or another equivalent jellifying agent such as alginates, carob, xanthan, gellan, carboxymethylcellulose, pectin, starch or its derivatives, gelatine, guar gum, agar, or a mixture thereof.

Preferably, the concentration of thickening ingredient in the jellified composition is comprised between 0.1 and 5.0%, preferably between 0.5 and 1.5%.

In one possible aspect of the present invention, the jellified composition is aerated and/or whipped.

Most preferably, the texture of the jellified composition is such that:
(i) the rupturing force - measured at 8°C by a TAXT2 test method - is comprised between 75 and 180 gr.,
(ii) the static viscosity measured by a Brookfield viscosity method (module 92 ; 5 rpm rotation speed) at 42°C is comprised between 1000 and 1200 cP.

Furthermore, the pH of the jellified composition is preferably comprised between 3.0 and 6.0, preferably between 3.5 and 5.0, and the pH of the inclusion is also preferably comprised between 3.0 and 6.0, preferably between 3.5 and 5.0.

Advantageously, the jellified composition is translucent or transparent. It could however be opaque in some instances.

### Brief description of the drawings

Additional features and advantages of the present invention are described in, and will be apparent from, the description of some embodiments which are set out below with reference to the drawings in which:
Figure 1 is a schematic perspective view showing one first embodiment of a composite food product according to the invention ;
Figure 2 is a schematic perspective view showing one second embodiment of a composite food product according to the invention.

### Detailed description of the invention

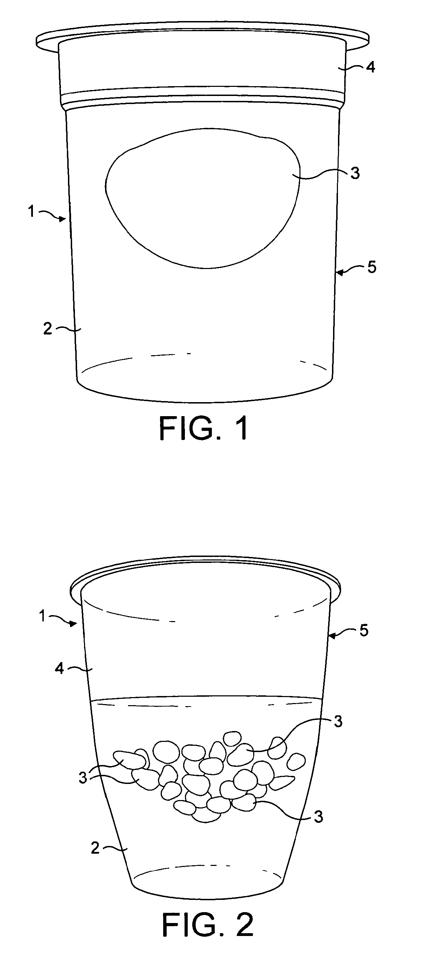

In **Figure 1** is shown a first possible embodiment of a composite food product 1 according to the invention. As will be understood from the following description, the composite product 1 can be a dessert (i.e. a sweetened food product), but it can be also a composite salted food product. More precisely, the food product comprises an outer shell 2 made of a translucent jellified composition, that surrounds an inclusion 3 that comprises a different product.

By "outer shell", it is meant that the jellified composition separates the inclusion has hereafter described from ambient air. This is well illustrated in the examples shown in figures 1 or 2. In practice however, it is possible that, due to the physical constraints imposed by the manufacturing process, a very small area of the inclusion is in contact with ambient air. Such an area cannot be larger than the section of the dispensing opening of the nozzle that is used for injection the inclusion. Preferably, such an area is not larger than 1 mm².

The jellified composition comprises a fruit juice and one thickening ingredient which is a carrageenan.

Alternatively, the jellified compositions could be made out of a vegetable juice, or also be a water-based composition containing for instance extracts of fish, meat, coffee, tea or other plants, or cereals. By cereals, it is meant to cover all types of cereals extracts, but also soja, rice or almond milk extracts.

As can be seen in **Figure 1****,** the food product further comprises one inclusion 3 made of a fermented milk-based product, which is more precisely a fermented yogurt. Optionally, the milk composition is a foamed composition. Said milk, can be made out of soja, rice or almond.

By "inclusion" it is meant a volume of product contained inside the jelly 2, such that at least 50% of the volume of product is surrounded by jelly, and wherein said product is not in contact with ambient air (or headspace 4 when the dessert is packed in a pot 5). The minimal volume of the inclusion (or minimal total volume of inclusions) represents 0.5% of the total volume of the dessert 1 according to the invention.

The preparation of the composite product - for instance a dessert - 1 comprises the following steps.

A mix of fruit juice is prepared, that can be clarified by filtration, and which is heated to about 70°C for about 5 minutes. When the juice is at 70°C, carrageenan and guar gum powder is added to the juice, so that the concentration of carrageenan in the final jellified mix is of about 0.1 to 1.5% and guar gum is between 0.1 and 1%. The said mix is then cooled to a temperature of about 30 to 40°C, where the mix starts to thicken due to the specific properties of the thickening agents.

A milk composition is then prepared, wherein said milk composition is homogenised at a temperature of 70°C and a pressure of about 250 bar for at least 15 seconds. Then said milk composition is heated for pasteurisation treatment at 92°C, during 6 min. Finally, said milk composition is cooled to a temperature of 40°C and lacto-ferments are added to the milk composition, so as to produce a fermented yogurt.

The juice mix is then dosed into a pot, such that said mix represents about 80% of the final product volume.

The milk composition is then injected into the thickened juice mix, at a temperature of about 30 to 45°C, so as to create one inclusion of milk composition into the jellified juice, that is represented in **Figure 1**. This inclusion fills the rest of the final product volume, that is to say, the inclusion of milk product represents about 10 to 30% of the volume of the final product.

When the inclusion is dosed, the temperature of the jelly mix is kept under the solidifying temperature of the said mix.

The reason for this is that in order to keep the machine speed as high as possible, the jelly needs to solidify very quickly after it is packed in pots, so that it can resist to the force of injection of the inclusion on the manufacturing lines, and such that predetermined specific shapes can be obtained for this inclusion. By keeping the temperature of the jelly below its fusion point, but in a fluid state by bringing energy in the form of mechanical agitation, it is possible to pack the jelly in a liquid state into the pots. More precisely, the jelly mix batch is kept circulating into a semi-closed circuit. The jelly mix is dosed directly from this circuit that serves as a jelly mix stock, into packages.

As soon as the jelly is packed in the pots, it starts solidifying to reach a viscosity of about 1000 to 1200 cP within 10 to 15 seconds. During that short solidification period, the inclusion is injected. Then, the whole dessert is put at a lower temperature, eg. in a fridge to finish the solidification of the jelly.

In the example that is represented in **Figure 1**, the milk-based yogurt is a fermented yogurt, which requires incubating the composite food product at a temperature of about 40°C for at least 4 hours in order to obtain a coagulum at pH 4.6.

Finally, the food product is smoothed at 25-30°C to stop fermentation and cooled at a storage temperature comprised between 1 and 9°C, more preferably between 5 and 7°C.

According to the jelly mix properties and conditions of inclusion dosing, the number, size and shape of the inclusion(s) can vary, and be randomly disposed and shaped, or controlled in a reproducible manner, by controlling the viscosity and texture properties of the jelly mix and inclusion product, and also the dosing process parameters.

After it has solidified, i.e. in the final product, the texture of the jellified composition is such that, at a temperature of about 8°C, which corresponds substantially to a storage temperature, the rupturing force measured by using a TAXT2 test method, with a module diameter of 2.5cm, a penetration of 10mm, and a penetration speed of 1 mm/sec, is comprised between 75 and 180 gr.

The static viscosity measured at 42°C is comprised between 1000 and 1200 cP. The results of the measurements are illustrated in the following graph:

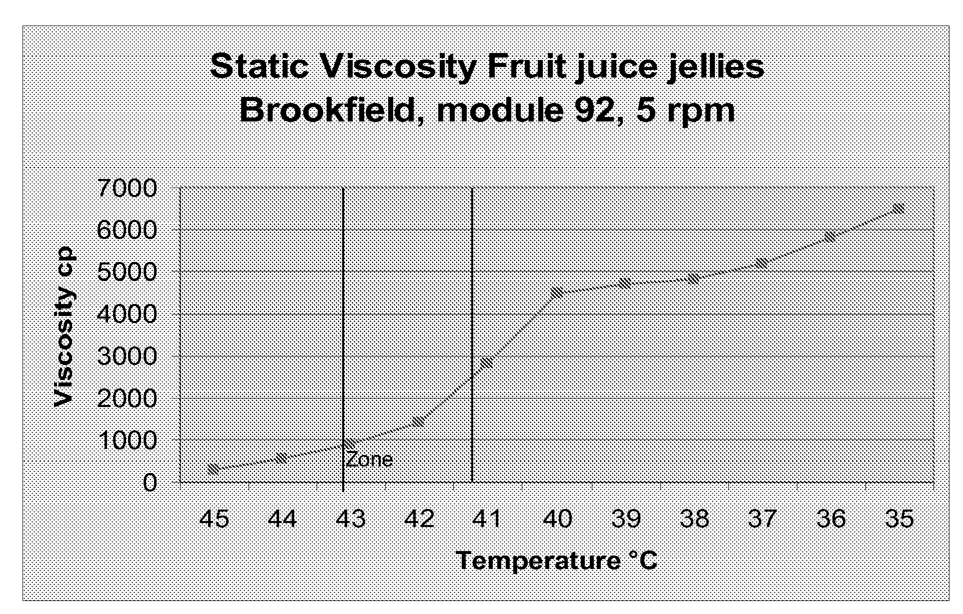

The range of temperature comprised between 43°C and 41°C is typically the range of temperature wherein the jellified composition is packed, and wherein the inclusions are injected.

The pH of the jellified composition is comprised between 3.0 and 6.0, preferably between 3.5 and 5.0 and its water activity Aw is superior or equal to 0.95, preferably Aw is superior or equal to 1.0.

The pH of the inclusion of fermented yogurt is comprised between 3.0 and 6.0, preferably between 3.5 and 5.0.

In a second embodiment of the present invention that is represented in **Figure 2**, the composite food product 1 packed into a pot 5 comprises a milk composition that is injected into a thickened juice mix, at a temperature of about 30 to 45°C, so as to create a plurality of inclusions 3 of milk composition into the jellified juice 2. The total volume of the milk composition 3 that is injected into the jelly 2 is sufficient for reaching the final product volume, i.e. about 10 to 20% of the volume of the final product, the rest of the volume of the pot 5 being the headspace 4.

Other recipes for a composite food product according to the present invention could comprise the following examples which are not meant to be limiting.

### Example 1 - Inclusion of coconut yogurt into a Earl Grey tea jelly

Coconut yogurt:
- stirred yoghurt curd: 74.20%
- coconut syrup : 25.80%

Earl Grey Tea jelly:
- Earl Grey Tea : 91.09%
- Carrageenan (eg. *BW 56*) : 0.60%
- Sugar: 8.00%
- Guar gum (eg. *Meyprodor 400*) : 0.30%
- citric acid : 0.01 %

### Example 2 - Inclusion of fresh cheese into a apple juice aerated jelly

Fresh cheese:
- curd fresh cheese : 62.00%
- skimmed milk : 15.00%
- cream (35% fat) : 15.00%
- sugar : 8.00%

Apple juice aerated jelly:
- apple juice : 98.8%
- gelatine (eg. *275 PS 30*) : 1.00%
- agar agar (eg. *Flanogen P*) : 0.2%
- jelly is then aerated with an overrun of 48%

### Example 3 - Inclusion of honey yogurt into a banana cream jelly

Honey yogurt:
- curd stirred yoghurt : 91.70%
- liquid honey : 9.30%

Banana cream jelly:
- banana cream : 99.35%
- Carrageenan (eg. *BW 56*) : 0.50%
- Guar gum (eg. *Meyprodor 400*) : 0.15%

### Example 4 - Inclusion of "Salmon yogurt" into a tomato jelly

Salmon yogurt:
- non fat curd yogurt: 78.10%
- cream (35% fat): 19.80%
- Olive oil: 1.70%
- Salmon powder with salt: 0.40%

Tomato jelly:
- Tomato juice: 98.80%
- Carraghenan (eg. BW56) : 1.00%
- Guar gum (eg. Meyprodor 400) : 0.2%

In all of the embodiments described above, the inclusion can be made by two different types of manufacturing processes. The first comprises injecting the inclusion by means of a needle that plunges into the jelly mix, and then moves upwards relative to said mix, while it doses the product to form the inclusion. The second, alternative, process comprises dosing the inclusion without contact between the dosing nozzle and the jelly mix. In this case, the nozzle is disposed above the level of jelly mix. The mix is kept soft enough and the product forming the inclusion is expulsed from the nozzle with a predetermined speed so that the inclusion penetrates the mix.

Further, if the inclusion of the product according to the invention contains yogurt, such a yogurt can be obtained by fermentation, but also by other processes. The yogurt coagulation can for example by chemical acidification (for instance by adding glucono-delta-lactone to the milk), or by enzymatic treatment (for instance, by adding rennet to the milk).

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. A process for manufacturing a composite food product, **characterized in that** it comprises following consecutive steps of:
(i) preparing a mix of at least one fruit and/or vegetable juice, or a water-based composition containing extracts of fish, meat, coffee, tea or other plants, or cereals, with at least one gelling ingredient such as a carrageenan or another equivalent jellifying agent such as gelatine, guar gum, agar, or a mixture thereof, heating said mix to at least 70°C for at least 3 min., and then cooling said mix to a temperature comprised between 12 and 50°C, preferably comprised between 30 and 45°C so as to thicken the said mix, then
(ii) preparing a fermented or non-fermented milk-based product, and/or a puree, spread, pasta, filling composition, cream, foamed composition or mousse comprising chocolate, coffee, tea, cereals, fruit, vegetable, meat, fish, cereals, or a combination thereof, wherein said milk composition is homogenised at a temperature superior to 60°C and a pressure of at least 220 bar for at least 15 sec., then said milk composition and/or said puree, spread, pasta, filling composition, cream, foamed composition or mousse is heated for at least 80°C, during at least 5 min., and then said milk composition and/or said puree is cooled to a temperature not higher than 5°C, preferably to a temperature equal to 4°C, then
(iii) dosing the juice or water-based composition mix into a container at a temperature that is inferior to its solidifying temperature but keeping it in movement during the whole dosing step so that it keeps its liquid state, said dosing being such that said mix represents at least 50%, preferably at least 60, more preferably at least 70% of the final product volume, and then
(iv) injecting at least once the milk composition and/or puree, spread, pasta, filling composition, cream, foamed composition or mousse into the thickened juice mix so as to create at least one inclusion of milk composition and/or puree, spread, pasta, filling composition, cream, foamed composition or mousse into the jellified juice, then
(v) optionally incubating the resulting composite food product at a temperature of at least 30°C, preferably a temperature of about 40°C for at least 3 min., so as to activate the coagulation of the inclusion, in the case where said inclusion(s) comprise(s) a fermented milk,
(vi) cooling said food product at a storage temperature, said temperature being preferably comprised between 1 and 9°C, more preferably between 5 and 7°C.

2. A process according to the preceding claim 1, wherein the inclusion is injected into the thickened juice mix at a temperature comprised between 4 and 50°C, preferably a temperature of about 42°C.

3. A process according to any of the preceding claims 1 or 2, wherein the dosing steps are achieved sequentially and directly in the container, by injecting firstly the juice or water-based mix, and then secondly needle-injecting the inclusions of milk composition and/or puree, spread, pasta, filling composition, cream, foamed composition or mousse, into the juice or water-based mix, using a needle that is movable relative to said juice or water-based mix.

4. A process according to any of the preceding claims 1 or 2, wherein the dosing steps are achieved sequentially and directly in the container, by injecting firstly the juice or water-based mix, and then secondly injecting the inclusions of milk composition and/or puree, spread, pasta, filling composition, cream, foamed composition or mousse, with a nozzle disposed above the surface of juice or water-based mix.

5. A composite food product (1) obtained by a process according to any of the preceding claims 1 to 4, **characterized in that** it comprises in combination:
(i) an outer shell (2) made of a jellified composition,
(ii) at least one edible inclusion (3) made of :
- a fermented or non-fermented milk-based product, and/or
- a puree, spread, pasta, filling composition, cream, foamed composition or mousse comprising chocolate, coffee, tea, cereals, fruit, vegetable, meat, fish, cereals, or a combination thereof.

6. A composite food product (1) according to claim 5, wherein the water activity Aw of the jellified composition (2) is Aw ≥ 0.95, preferably Aw ≥ 1.0.

7. A composite food product (1) according to any of the preceding claims, wherein the jellified composition (2) comprises at least one fruit and/or vegetable juice, or a water-based composition containing extracts of fish, meat, coffee, tea or other plants, or cereals, said jellified composition further comprising at least one gelling ingredient such as a carrageenan or another equivalent jellifying agent such as gelatine, guar gum, agar, or a mixture thereof.

8. A composite food product (1) according to claim 7, wherein the concentration of thickening ingredient in the jellified composition is comprised between 0.1 and 5.0%, preferably between 0.5 and 1.5%.

9. A composite food product (1) according to any of the preceding claims, wherein the jellified composition (2) is aerated and/or whipped.

10. A composite food product (1) according to any of the preceding claims, wherein the texture of the jellified composition (2) is such that:
(i) the rupturing force - measured by a TAXT2 test method - is comprised between 75 and 180 gr.,
(ii) the static viscosity measured by a Brookfield viscosity method (module 92 ; 5 rpm rotation speed) at 42°C is comprised between 1000 and 1200 cP.

11. A composite food product (1) according to any of the preceding claims, wherein the pH of the jellified composition (2) is comprised between 3.0 and 6.0, preferably between 3.5 and 5.0, and the pH of the product forming the inclusion (3) is comprised between 3.0 and 6.0, preferably between 3.5 and 5.0.

12. A composite food product (1) according to any of the preceding claims, wherein the jellified composition (2) is translucent or transparent.
